(19) 

**Europäisches Patentamt**
**European Patent Office**
**Office européen des brevets**

(11) **EP 2 124 095 A1**

(12) **EUROPEAN PATENT APPLICATION**
published in accordance with Art. 153(4) EPC

(43) Date of publication:
**25.11.2009 Bulletin 2009/48**

(21) Application number: **07850357.0**

(22) Date of filing: **10.12.2007**

(51) Int Cl.:
*G02F 1/1335* (2006.01)          *G02B 5/02* (2006.01)
*G02F 1/13357* (2006.01)

(86) International application number:
**PCT/JP2007/073789**

(87) International publication number:
**WO 2008/072599 (19.06.2008 Gazette 2008/25)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **11.12.2006 JP 2006332809**

(71) Applicant: **Sharp Kabushiki Kaisha**
**Osaka-shi, Osaka 545-8522 (JP)**

(72) Inventors:
• **MIYAZAKI, Shinichi**
  **Osaka-shi, Osaka 545-8522 (JP)**
• **MISONO, Kenji**
  **Osaka-shi, Osaka 545-8522 (JP)**

(74) Representative: **Müller - Hoffmann & Partner**
**Patentanwälte**
**Innere Wiener Strasse 17**
**81667 München (DE)**

(54) **LIQUID CRYSTAL DISPLAY DEVICE**

(57)     Blurriness of display in a liquid crystal display device having a light diffuser is suppressed.

A liquid crystal display device according to the present invention includes a light source, a liquid crystal display panel for modulating light emitted from the light source, and a light diffuser being disposed at a viewer's side of the liquid crystal display panel and diffusing light traveling through the liquid crystal display panel. The liquid crystal display panel includes a color filter, and the light diffuser is disposed so that a distance d between the color filter and the light diffuser, a pixel pitch p of the liquid crystal display panel, and a display surface luminance L satisfy the relationship $d/p < 12.151L^{-0.3186}$.

*FIG.1*

EP 2 124 095 A1

**Description**

## TECHNICAL FIELD

The present invention relates to a liquid crystal display device, and in particular to a liquid crystal display device including a light diffuser for diffusing light going out from a liquid crystal display panel.

## BACKGROUND ART

In recent years, portable electronic devices such as mobile phones and PDAs (Personal Digital Assistants) are in wide use. In a display section of a portable electronic device, a liquid crystal display device is frequently used because of its advantages in terms of thinness, light weight, and low power consumption.

In a liquid crystal display device, the display element itself does not emit light, unlike self-light-emitting type display devices such as CRTs and PDPs (plasma display panels). Therefore, in a transmission-type liquid crystal display device, an illuminator called a backlight is provided at the rear face side of the liquid crystal display element, and an image is displayed as the transmitted amount of the illumination light from this backlight is controlled by the liquid crystal display element in a pixel-by-pixel manner.

Liquid crystal display devices of various methods are known. However, some methods (e.g., methods using a TN type or STN type liquid crystal display element) have a disadvantage of narrow viewing angles, and various techniques are under development for overcoming this disadvantage.

As a representative technique for improving the viewing angle characteristics of a liquid crystal display device, there is a method of adding an optical compensation plate. There is also known a method of enhancing the directivity (degree of parallelism) of light which is emitted from a backlight before the light enters a liquid crystal display element, and allowing the light having traveled through the liquid crystal display element to be diffused by a lenticular lens sheet which is disposed on the front face of the liquid crystal display element (e.g., Patent Document 1).

FIG. **12** shows a liquid crystal display device **500** which is disclosed in Patent Document 1. The liquid crystal display device **500** includes a liquid crystal display panel **520,** a backlight **510** disposed at the rear face side of the liquid crystal display panel **520,** and a lenticular lens sheet **530** disposed at a viewer's side of the liquid crystal display panel **520.**

The backlight **510** includes a light source **501** and a light guide plate **502** for guiding the light having been emitted from the light source **501** to the liquid crystal display panel **520.** The light guide plate 502 has an outgoing face **502a** through which light goes out toward the liquid crystal display panel **520** and a rear face **502b** opposing the outgoing face **502a.** A plurality of prisms **503** are provided on the rear face **502b.**

While propagating within the light guide plate **502,** the light having been emitted from the light source **501** is reflected toward the liquid crystal display panel **520** by the prisms **503** on the rear face, so as to go out through the outgoing face **502a.** Each prism **503** has two slopes that are slanted at respectively difference predetermined angles with respect to the outgoing face **502a,** so that the light which is emitted from the backlight **510** has a very strong intensity along the display surface normal direction (frontal direction). In other words, a high directivity is imparted to the light emitted from the backlight **510.**

Since the liquid crystal display panel **520** is designed so that light entering parallel to the display surface normal direction has the highest contrast ratio, it is possible to obtain an improved contrast ratio by allowing the aforementioned high-directivity light to enter the liquid crystal display panel **520.** Moreover, the light having traveled through the liquid crystal display panel **520** is diffused by the lenticular lens sheet **530,** whereby the viewing angle is broadened. In this manner, with the liquid crystal display device **500,** both a high contrast ratio and wide viewing angle characteristics are realized.

[Patent Document 1] Japanese Laid-Open Patent Publication No. 9-22011

## DISCLOSURE OF INVENTION

## PROBLEMS TO BE SOLVED BY THE INVENTION

However, blurriness of display occurs in the liquid crystal display device 500 disclosed in Patent Document 1, thus deteriorating the display quality. This blurriness of display occurs when light emitted from one pixel is mixed with light which is emitted from another pixel and diffused by the lenticular lens sheet 530 (which is a light diffuser), which causes an intermixing of colors and deteriorates the displayed image.

The present invention has been made in view of the aforementioned problems, and an objective thereof is to suppress blurriness of display in a liquid crystal display device having a light diffuser.

## MEANS FOR SOLVING THE PROBLEMS

A liquid crystal display device according to the present invention is a liquid crystal display device comprising: a light source; a liquid crystal display panel for modulating light emitted from the light source; and a light diffuser being disposed at a viewer's side of the liquid crystal display panel and diffusing light traveling through the liquid crystal display panel, wherein, the liquid crystal display panel includes a color filter; and the light diffuser is disposed so that a distance d between the color filter and the light diffuser, a pixel pitch p of the liquid crystal display panel, and a display surface luminance L satisfy the relationship $d/p < 12.151L^{-0.3186}$.

In a preferred embodiment, the light diffuser is disposed so that the distance d, the pixel pitch p, and the display surface luminance L satisfy the relationship $d/p < 11.267L^{-0.3156}$.

In a preferred embodiment, the light diffuser is disposed so that the distance d, the pixel pitch p, and the display surface luminance L satisfy the relationship $d/p < 10.368L^{-0.3133}$.

In a preferred embodiment, the light diffuser is disposed so that the distance d, the pixel pitch p, and the display surface luminance L satisfy the relationship $d/p < 9.1486L^{-0.3068}$.

In a preferred embodiment, the light diffuser is disposed so that the distance d, the pixel pitch p, and the display surface luminance L satisfy the relationship $d/p < 7.2083L^{-0.2848}$.

In a preferred embodiment, the light diffuser is disposed so that the distance d, the pixel pitch p, and the display surface luminance L satisfy the relationship $d/p < 3.8036L^{-0.2003}$.

In a preferred embodiment, the liquid crystal display device according to the present invention comprises an illuminator which includes the light source.

In a preferred embodiment, the illuminator has an intensity distribution such that a luminance in directions at an angle of 30° or more with respect to a display surface normal direction is 13% or less of a luminance in the display surface normal direction.

In a preferred embodiment, the illuminator has an intensity distribution such that a luminance in directions at an angle of 30° or more with respect to a display surface normal direction is 3% or less of a luminance in the display surface normal direction.

In a preferred embodiment, the illuminator includes a directivity controlling element for controlling directivity of light emitted from the light source.

## EFFECTS OF THE INVENTION

A light diffuser of a liquid crystal display device according to the present invention is disposed so that a distance d between a color filter and a light diffuser, a pixel pitch p of a liquid crystal display panel, and a display surface luminance L satisfy a predetermined relationship, whereby blurriness of display is suppressed.

## BRIEF DESCRIPTION OF DRAWINGS

[FIG. 1] A cross-sectional view schematically showing a liquid crystal display device 100 according to a preferred embodiment of the present invention.
[FIG. **2**] A cross-sectional view showing an example of an illuminator (backlight) included in the liquid crystal display device **100.**
[FIG. **3**] A diagram for explaining a function of a prism sheet included in the illuminator shown in FIG. **2.**
[FIG. **4**] A cross-sectional view showing an example of a light diffuser included in the liquid crystal display device 100.
[FIG. **5**] A cross-sectional view showing another example of a light diffuser included in the liquid crystal display device **100.**
[FIG. **6**] A cross-sectional view showing still another example of a light diffuser included in the liquid crystal display device **100.**
[FIG. **7**] A diagram for explaining a relationship between a subject of viewing and an actual range of viewing, when an object is viewed via a light diffuser.
[FIG. **8**] A graph showing a relationship between d/p and a color difference ΔE*ab where a display surface luminance L is varied.
[FIG. **9**] A graph in which values of d/p which make ΔE*ab=3.0 in FIG. **8** are plotted against the horizontal axis representing the display surface luminance L and the vertical axis representing d/p.
[FIG. **10**] A graph in which values of d/p which make ΔE*ab=2.5, 2.0, 1.5, 1.0, 0.5 in FIG. **8** are plotted against the horizontal axis representing the display surface luminance L and the vertical axis representing d/p.
[FIG. **11**] **(a), (b),** and **(c)** are graphs showing exemplary intensity distributions of light emitted from an illuminator.

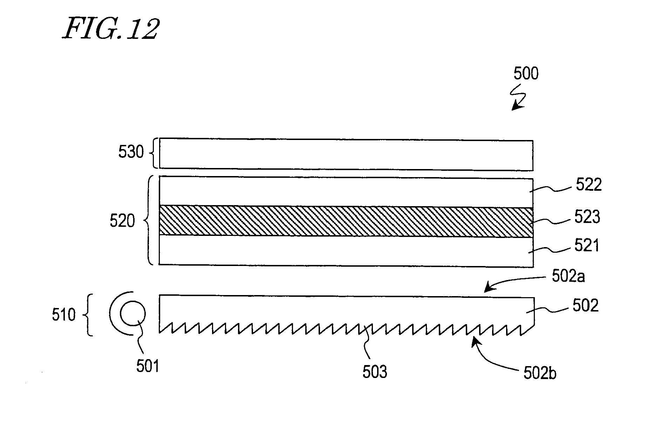

[FIG. **12**] A cross-sectional view schematically showing a conventional liquid crystal display device 500.

## DESCRIPTION OF REFERENCE NUMERALS

| | |
|---|---|
| **1** | light source |
| **2** | light guide plate |
| **3** | prism sheet (directivity controlling element) |
| **4** | prism |
| **10** | illuminator (backlight) |
| **20** | liquid crystal display panel |
| **21** | rear substrate |
| **22** | front substrate |
| **23** | liquid crystal layer |
| **24** | color filter |
| **30** | light diffuser |
| **30A** | lens sheet (light diffuser) |
| **30B** | prism sheet (light diffuser) |
| **30C** | diffusion film (light diffuser) |
| **31** | lens |
| **32** | prism |
| **33** | matrix |
| **34** | particles |
| **40a, 40b** | phase difference compensation element |
| **50a, 50b** | polarizing plate |
| **100** | liquid crystal display device |

## BEST MODE FOR CARRYING OUT THE INVENTION

Hereinafter, an embodiment of the present invention will be described with reference to the drawings. Note that the present invention is not limited to the following embodiment.

(Embodiment 1)

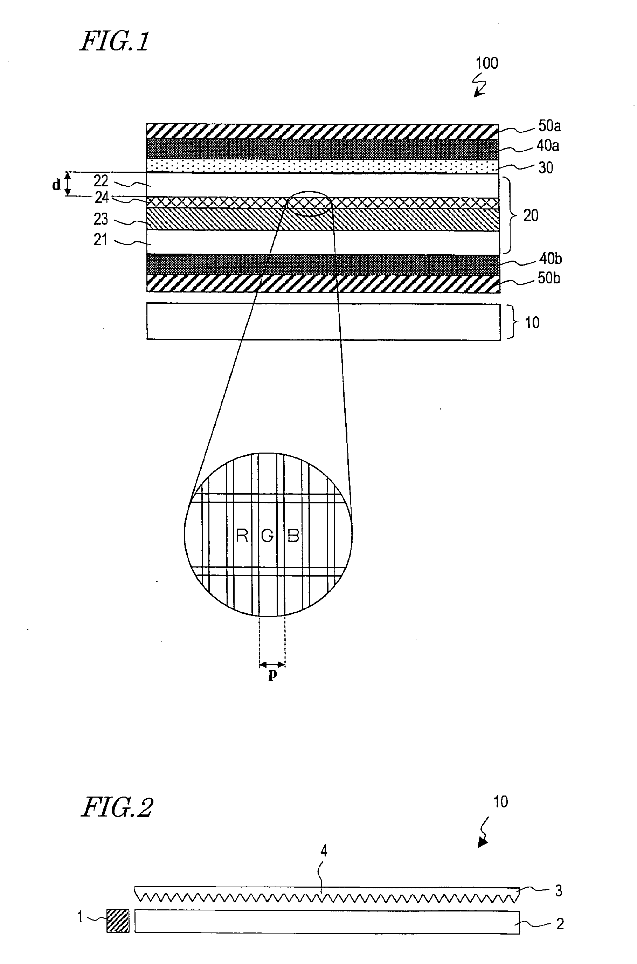

FIG. **1** shows a liquid crystal display device **100** according to the present embodiment. The liquid crystal display device **100** includes a liquid crystal display panel **20,** an illuminator (backlight) **10** disposed at a rear face side of the liquid crystal display panel **20,** and a light diffuser **30** disposed at a viewer's side of the liquid crystal display panel **20.**

The liquid crystal display panel **20** includes a pair of substrates **21** and **22,** and a liquid crystal layer **23** provided therebetween. On surfaces of the substrates **21** and **22** facing the liquid crystal layer **23,** electrodes for applying voltages across the liquid crystal layer **23** and alignment films for defining the orientation directions of liquid crystal molecules contained in the liquid crystal layer **23** (neither of them is shown) are formed. Moreover, a color filter **24** is provided on the liquid crystal layer **23** side of the substrate **22** which is disposed at the viewer's side (i.e., between the substrate **22** at the viewer's side and the liquid crystal layer **23**).

At the viewer's side of the liquid crystal display panel **20,** a phase difference compensation element **40a** and a polarizing plate **50a** are provided. Also at the rear face side of the liquid crystal display panel **20,** a phase difference compensation element **40b** and a polarizing plate **50b** are provided. Various known phase difference plates may be used as the phase difference compensation elements **40a** and **40b.** Note that the number and placement of the phase difference compensation elements are not limited to what is exemplified herein. Three or more phase difference compensation elements may be provided, or only one phase difference compensation element may be provided between either one of the polarizing plates **50a** and **50b** and the liquid crystal display panel **20.** The light diffuser **30** is disposed between the phase difference compensation element **40a** at the viewer's side and the liquid crystal display panel **20.**

The illuminator **10** at least includes a light source. Light which is emitted from the illuminator **10** of the present embodiment has a significantly strong intensity in the display surface normal direction (frontal direction). In other words, a high directivity is imparted to the light emitted from the illuminator **10.**

FIG. **2** shows an exemplary specific construction of the illuminator **10.** The illuminator **10** shown in FIG. **2** includes a light source **1** and a light guide plate **2** for guiding the light emitted from the light source **1** toward the liquid crystal display panel **20.** The light source **1** is a light-emitting diode (LED) or a cold-cathode tube, for example. In the light guide plate **2,** structures for allowing light which has been emitted from the light source **1** and entered into the light guide plate **2** to go out toward the liquid crystal display panel **20** are formed. For example, on at least one of the two principal faces of the light guide plate **2,** prism or grain is formed.

Furthermore, the illuminator **10** includes a prism sheet **3** for controlling the directivity of light going out from the light guide plate **2.** The prism sheet **3** functioning as a directivity controlling element is provided between the light guide plate **2** and the liquid crystal display panel **20.**

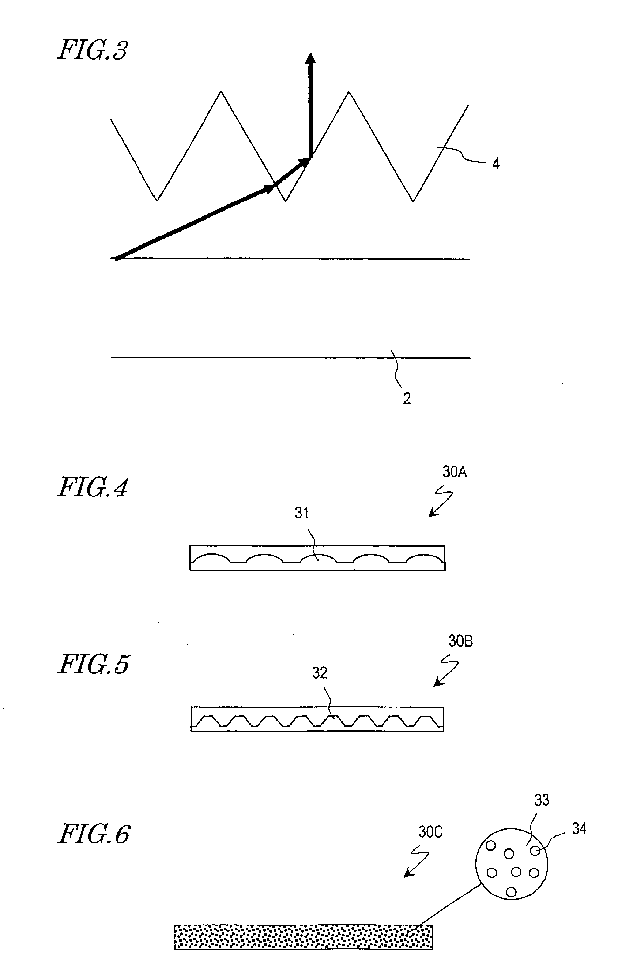

The prism sheet **3** includes a plurality of prisms **4** formed on its principal face closer to the light guide plate **2,** and as shown in FIG. **3,** directs the light going out from the light guide plate **2** in the display surface normal direction by utilizing a total reflection phenomenon. Thus, the prism sheet **3** imparts a high directivity to the light going out from the light guide plate **2.**

When the light emitted from the illuminator **10** has a high directivity, light traveling through the liquid crystal layer **23** can be substantially uniformly modulated (i.e., a substantially uniform retardation can be imparted to the light traveling through the liquid crystal layer **23**), whereby the viewing angle dependence of display quality associated with the refractive index anisotropy of the liquid crystal molecules can be reduced. As it is, the light having traveled through the liquid crystal layer **23** has a high directivity and a large imbalance in luminance (that is, a very high luminance exists along the display surface normal direction whereas luminances along oblique directions are low). However, through diffusion by the light diffuser **30,** the luminance imbalance is reduced, whereby the viewing angle is broadened.

As the light diffuser **30,** various devices having a function of diffusing light can be used. The light diffusers **30** may be a lens sheet **30A** having a plurality of lenses **31** as shown in FIG. **4,** or a prism sheet **30B** having a plurality of prisms **32** as shown in FIG. **5,** for example. The lens sheet **30A** and the prism sheet **30B** diffuse light by utilizing a refraction action or total reflection phenomenon at the lenses **31** or prisms **32.**

Alternatively, the light diffuser **30** may be a diffusion film **30C** which utilizes internal scatter, as illustrated in FIG. **6.** As shown partly enlarged in FIG. **6,** the diffusion film **30C** (which may also be referred to as a "diffuser") includes a matrix **33** made of a resin material, and particles **34** which are dispersed in the matrix **33** and have a refractive index different from the refractive index of the matrix **33.** The diffusion film **30C** diffuses light by utilizing a scatter phenomenon due to the difference in refractive index between the matrix **33** and the particles **34.** Moreover, the lens sheet **30A** or the prism sheet **30B** may be used in combination with the diffusion film **30C.**

The light diffuser **30** of the present embodiment is disposed so that a distance **d** between the color filter **24** and the light diffuser **30,** a pixel pitch **p** of the liquid crystal display panel **20,** and a display surface luminance L satisfy the relationship of eq. (1) below.

$$d/p < 12.151L^{-0.3186} \qquad \cdots(1)$$

Note that the distance **d** between the color filter **24** and the light diffuser **30** as mentioned herein is, strictly speaking, the interval between a surface of the color filter **24** closer to the viewer's side and a surface of the light diffuser **30** closer to the rear face side (opposite from the viewer's side), as is also shown in FIG. 1. The pixel pitch **p** means the smallest pitch among a number of pitches that may exist, as shown in a partially enlarged view of the color filter **24** in FIG. **1.** The display surface luminance L is a luminance when all of the pixels are placed in a white displaying (displaying the highest gray scale level) state.

By disposing the light diffuser **30** so that the distance **d,** the pixel pitch **p,** and the display surface luminance L satisfy the relationship of eq. (1) above, a high-quality displaying with suppress blurriness of display can be performed. Hereinafter, the reason behind this will be specifically described.

"Blurriness of display" is a phenomenon where irrelevant light is mixed into light (an image) that is meant to be visually perceived, thus causing an intermixing of colors and rendering the image unclear. Therefore, the level of blurriness of display can be expressed by, with respect to a given pixel, using a color difference when the luminance of the surrounding pixels is changed, and can be expressed as a color difference ΔE*ab in the L*ab (CIE1976) color system, for example. The color difference ΔE*ab can be measured according to JIS Z8729. Table 1 below shows a specific correspondence between values of ΔE*ab and emotive expressions of vision. As can also be seen from Table 1, by ensuring that the color difference ΔE*ab is less than 3.0, a displaying is realized in which blurriness of display is suppressed and which is free of awkwardness.

[Table 1]

| emotive expression of vision | ΔE*ab |
| --- | --- |

(continued)

| trace color difference | 0 - 0.5 |
|---|---|
| slight color difference | 0.5 - 1.5 |
| noticeable color difference | 1.5 - 3.0 |
| appreciable color difference | 3.0 - 6.0 |
| much color difference | 6.0 - 12.0 |
| very much color difference | 12.0 - |

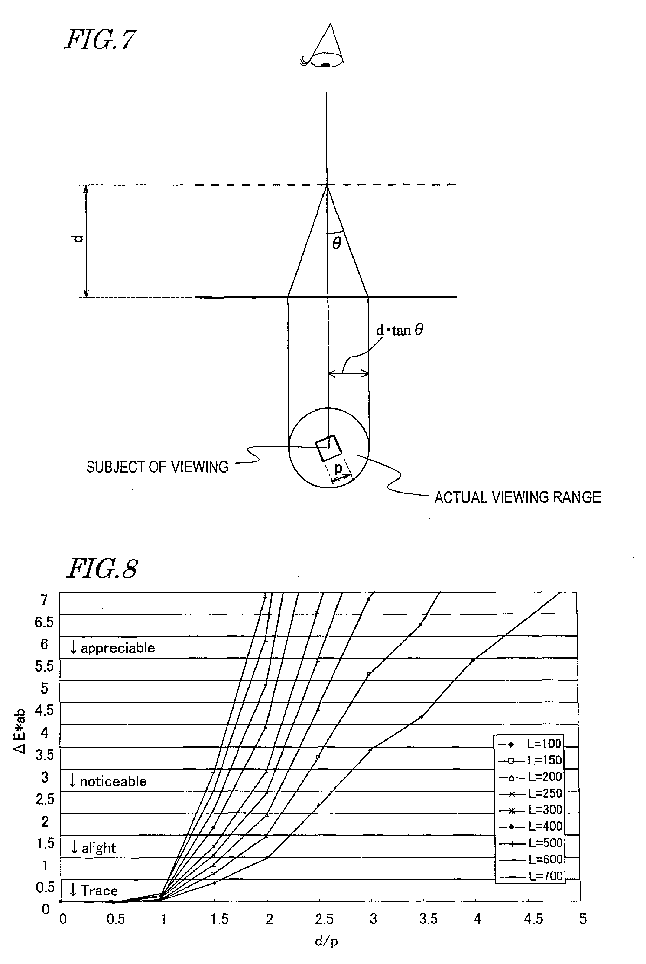

According to detailed studies of the inventors, it has been found that a blurriness of display which is expressed as a color difference $\Delta E^*ab$ can be evaluated by using a ratio d/p between the distance **d** and the pixel pitch **p** as a parameter. In the case where an object is viewed through a light diffuser, the viewer will be viewing light from a range which is larger than the subject of viewing, as shown in FIG. **7.** Therefore, the level of blurriness of display depends on the proportion which the subject of viewing occupies within the actual viewing range. Assuming that the diffuse angle of the light diffuser is $\theta$ ; the distance between the light diffuser and the subject of viewing is **d;** and the length of one side of the subject of viewing is **p,** then the area of the actual viewing range is $\pi \cdot (d \cdot \tan\theta)^2 = \pi d^2 \tan^2\theta$, whereas the area of the subject of viewing is $p^2$. Therefore, the proportion which is occupied by the subject of viewing within the viewing range is $p^2/(\pi d^2 \tan^2\theta) = (p/d)^2 \cdot (1/\pi \tan^2\theta)$.

Since the above discussion straightforwardly applies to any pixel that is distant from the light diffuser **30** by the distance **d,** the blurriness of display can be evaluated by using the ratio d/p between the distance **d** and the pixel pitch **p** (which is an inverse of p/d) as a parameter.

Moreover, a blurriness of display which is expressed as a color difference $\Delta E^*ab$ can also be evaluated by using the display surface luminance L as a parameter. FIG. **8** shows a relationship between d/p and the color difference $\Delta E^*ab$ where the display surface luminance L ($cd/m^2$) is varied. Note that FIG. **8** shows a color difference $\Delta E^*ab$ which is measured with respect to a red pixel between a black displaying state and a cyan displaying state. In a black displaying state, all of the red pixel, the green pixel, and the blue pixel in a picture element are at the lowest luminance, whereas in a cyan displaying state, the red pixel is at the lowest luminance but the green pixel and the blue pixel are at the highest luminance. As the measurement equipment, a high-sensitivity microspectrography unit TFCAM-7000C manufactured by Lambda Vision, inc. was used for the measurements. The measurements were taken under conditions where a 10 $\times$ lens was used as an objective lens and an illuminator **10** including X-BEF (manufactured by Sumitomo 3M Limited) as the directivity controlling element **3** was used.

As can be seen from FIG. **8,** given the same d/p, the color difference $\Delta E^*ab$ increases as the display surface luminance L increases. Therefore, the blurriness of display can be evaluated also by using the display surface luminance L as a parameter. It can also be seen from FIG. **8** that, given the same display surface luminance L, the color difference $\Delta E^*ab$ increases as d/p increases.

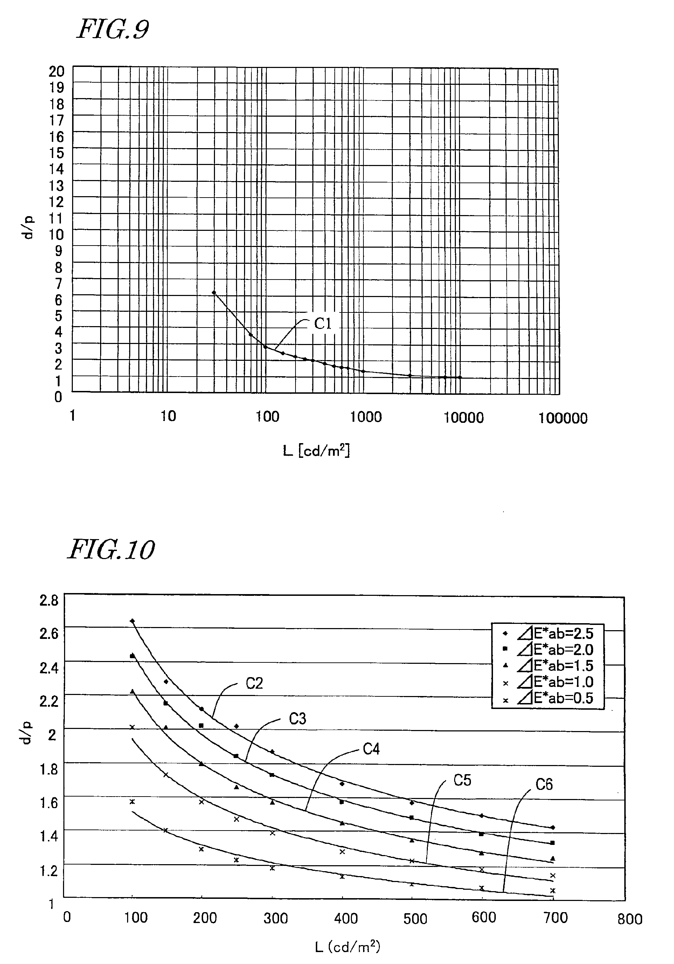

FIG. **9** shows values of d/p which make $\Delta E^*ab = 3.0$ in FIG. **8,** being plotted against the horizontal axis representing the display surface luminance L and the vertical axis representing d/p. FIG. **9** also shows a curve **C1** which is a power approximation of the plotted d/p values. This curve **C1** is expressed by eq. (2) below.

$$d/p = 12.151 L^{-0.3186} \qquad \cdots (2)$$

In the graph of FIG. **9,** if a point which is defined by d/p and $\Delta E^*ab$ is located below the curve **C1**, $\Delta E^*ab$ is less than 3.0. Therefore, if the ratio d/p between the distance **d** and the pixel pitch **p** and the display surface luminance L satisfy the already-described relationship eq. (1) (which corresponds to eq. (2) where the equal sign has been replaced with an inequality sign), it can be ensured that $\Delta E^*ab$ is less than 3.0, so that the blurriness of display can be sufficiently suppressed.

Note that, when measuring the color difference $\Delta E^*ab$ shown in FIG. **8** and FIG. **9,** a cyan displaying state was selected as one state for measurement. This is because the color difference $\Delta E^*ab$ will be larger when a cyan displaying state is selected than when a state of displaying any other color is selected. Table 2 below shows values of color difference $\Delta E^*ab$ when a cyan displaying state (where only the red pixel is at the lowest luminance), a magenta displaying state (where only the green pixel is at the lowest luminance), or a yellow displaying state (where only the blue pixel is at the lowest luminance) is selected (d/p = 5.25). As can also be seen from Table 2, when a cyan displaying state is selected, the color difference ΔE*ab is larger than when a magenta displaying state or a yellow displaying state is selected.
[Table 2]

|  | cyan | magenta | yellow |
|---|---|---|---|
| ΔE*ab | 20.66 | 8.93 | 7.28 |

Moreover, when measuring the color difference ΔE*ab shown in FIG. **8** and FIG. **9,** the measurements were taken in a state where cyan was displayed in a stripe pattern. This is because the color difference ΔE*ab will become large by displaying such a pattern. Table 3 below shows values of color difference ΔE*ab in the case where measurements are taken in a state of displaying cyan in a stripe pattern (a state where the picture elements surrounding the picture element containing the pixel for evaluation are also displaying cyan), and in the case where the measurements are taken in a state of displaying cyan in a dot pattern (a state where the surrounding picture elements are displaying white). As can also be seen from Table 3, when cyan is displayed in a stripe pattern, the color difference ΔE*ab is larger than when cyan is displayed in a dot pattern.
[Table 3]

| picture element containing pixel for evaluation | cyan displaying | |
|---|---|---|
| surrounding picture elements | cyan displaying | white displaying |
| ΔE*ab | 20.66 | 15.12 |

As described above, when measuring the color difference ΔE*ab shown in FIG. **8** and FIG. **9,** the measurements were taken under conditions which would maximize the color difference ΔE*ab, i.e., conditions under which blurriness of display was most likely to occur. Therefore, by disposing the light diffuser **30** so as to fit below the curve **C1** shown in FIG. **9** (i.e., so that d/p and L satisfy the relationship of eq. (1)), blurriness of display can be sufficiently suppressed.
Note that, in order to further suppress blurriness of display, it is preferable to dispose the light diffuser 30 so that the color difference ΔE*ab becomes even smaller. FIG. **10** shows values of d/p which make ΔE*ab=2.5, 2.0, 1.5, 1.0, 0.5. FIG. **10** also shows curves **C2, C3, C4, C5,** and **C6** which are power approximations of the illustrated d/p values with respect to ΔE*ab=2.5, 2.0, 1.5, 1.0, and 0.5, respectively. These curves **C2, C3, C4, C5,** and **C6** are expressed by eqs. (3), (4), (5), (6), and (7) below.

$$d/p = 11.267L^{-0.3156} \qquad (3)$$

$$d/p = 10.368L^{-0.3133} \qquad (4)$$

$$d/p = 9.1486L^{-0.3068} \qquad (5)$$

$$d/p = 7.2083L^{-0.2848} \qquad (6)$$

$$d/p = 3.8036L^{-0.2003} \qquad (7)$$

Therefore, by disposing the light diffuser **30** so that each point which is defined by d/p and L is located below the curve **C2, C3, C4, C5,** or **C6,** i.e., by disposing the light diffuser **30** so that d/p and L satisfy the relationship of eq. (8), (9), (10), (11), or (12) below, it can be ensured that the color difference ΔE*ab is less than 2.5, less than 2.0, less than 1.5, less than 1.0, or less than 0.5, whereby blurriness of display can be further suppressed.

$$d/p < 11.267 L^{-0.3156} \qquad (8)$$

$$d/p < 10.368 L^{-0.3133} \qquad (9)$$

$$d/p < 9.1486 L^{-0.3068} \qquad (10)$$

$$d/p < 7.2083 L^{-0.2848} \qquad (11)$$

$$d/p < 3.8036 L^{-0.2003} \qquad (12)$$

Note that, as is also shown in FIG. **1,** the light diffuser **30** is preferably disposed outside the liquid crystal display panel **20.** When the light diffuser **30** is disposed outside the liquid crystal display panel **20,** the light diffuser **30** can be formed less expensively than in the case where it is disposed inside the liquid crystal display panel 20 (e.g., between the substrate **22** at the viewer's side and the color filter **24**). An additional advantage will be that broader choices of the material of the light diffuser **30** become possible.

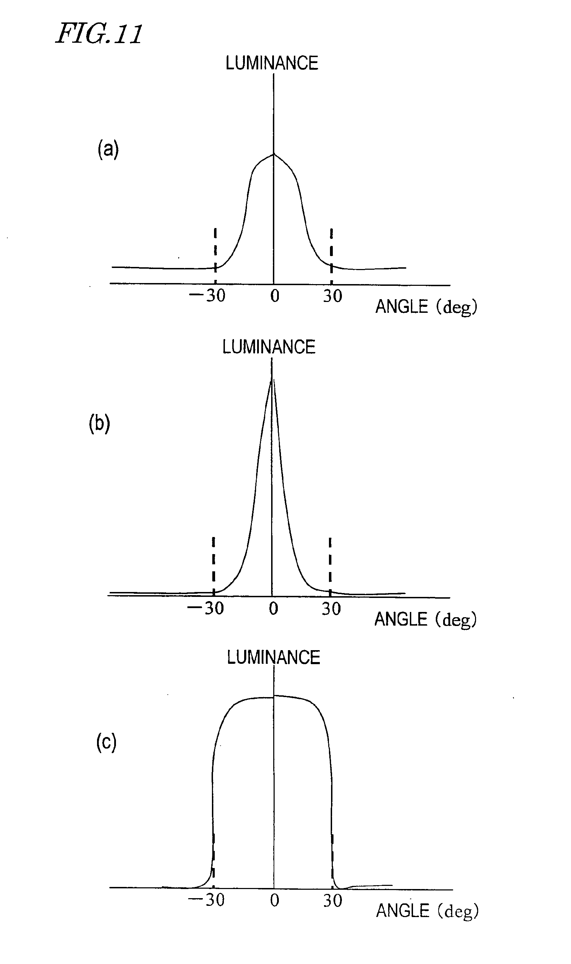

Moreover, without limitation to what is exemplified in FIG. **2,** various backlights can be used as the illuminator **10.** However, in order to obtain a higher contrast ratio, it is preferable to use that which is able to emit light with a higher directivity. Specifically, the illuminator **10** preferably has an intensity distribution such that the luminance in directions at an angle of 30° or more with respect to the display surface normal direction is 13% or less, and more preferably 3% or less, of the luminance in the display surface normal direction. FIGS. **11(a), (b),** and **(c)** show preferable examples of intensity distribution of the illuminator **10.**

In the intensity distribution shown in FIG. 11 (a) , the luminance in directions at an angle of 30° or more with respect to the display surface normal direction is equal to or less than 8% to 13% of the luminance in the display surface normal direction (0°). By using illuminators **10** having such intensity distributions, a more excellent display quality can be obtained.

Moreover, in the intensity distributions shown in FIGS. **11(b)** and **(c),** the luminance in directions at an angle of 30° or more with respect to the display surface normal direction is 3% or less of the luminance in the display surface normal direction (0°). By using illuminators **10** having such intensity distributions, an even more excellent display quality can be obtained.

The level of directivity shown in FIG. **11(a)** can be easily realized by using an illuminator **10** having the total-reflection type prism sheet **3** shown in FIG. **2,** for example. The levels of directivity of FIGS. **11(b)** and **(c)** can be realized by using the backlights disclosed in the specification of USP No. 5949933 and in the specification of USP No. 5598281. The specification of USP No. 5949933, supra, discloses an edge light type backlight, in which lenticular microprisms are provided on the principal face of a light guide plate. The specification of USP No. 5598281, supra, discloses a direct type backlight in which light having been emitted from a light source is allowed to enter microcollimators and microlenses via apertures.

## INDUSTRIAL APPLICABILITY

According to the present invention, the blurriness of display in a liquid crystal display device including a light diffuser can be suppressed, whereby a high quality displaying can be realized. The present invention is suitably used for liquid crystal display devices in general, and in particular, suitably used for liquid crystal display devices of display modes of poor viewing angle characteristics (e.g., STN mode, TN mode, ECB mode).

In display modes utilizing birefringence, e.g., the STN mode, there is a large unfavorable influence on displaying due to light which obliquely enters the liquid crystal layer, thus making it preferable to employ a viewing angle enlarging technique where highly directive light is allowed to enter a liquid crystal layer and light having been modulated by the liquid crystal layer is diffused by a light diffuser, thus leading to a large significance in applying the present invention.

**Claims**

1.  A liquid crystal display device comprising:

    a light source;
    a liquid crystal display panel for modulating light emitted from the light source; and
    a light diffuser being disposed at a viewer's side of the liquid crystal display panel and diffusing light traveling through the liquid crystal display panel, wherein,
    the liquid crystal display panel includes a color filter; and
    the light diffuser is disposed so that a distance d between the color filter and the light diffuser, a pixel pitch p of the liquid crystal display panel, and a display surface luminance L satisfy the relationship $d/p < 12.151L^{0.3186}$.

2.  The liquid crystal display device of claim 1, wherein the light diffuser is disposed so that the distance d, the pixel pitch p, and the display surface luminance L satisfy the relationship $d/p < 11.267L^{-0.3156}$.

3.  The liquid crystal display device of claim 1, wherein the light diffuser is disposed so that the distance d, the pixel pitch p, and the display surface luminance L satisfy the relationship $d/p < 10.368L^{-0.3133}$.

4.  The liquid crystal display device of claim 1, wherein the light diffuser is disposed so that the distance d, the pixel pitch p, and the display surface luminance L satisfy the relationship $d/p < 9.1486L^{-0.3068}$.

5.  The liquid crystal display device of claim 1, wherein the light diffuser is disposed so that the distance d, the pixel pitch p, and the display surface luminance L satisfy the relationship $d/p < 7.2083L^{-0.2848}$.

6.  The liquid crystal display device of claim 1, wherein the light diffuser is disposed so that the distance d, the pixel pitch p, and the display surface luminance L satisfy the relationship $d/p < 3.8036L^{-0.2003}$.

7.  The liquid crystal display device of any of claims 1 to 6, comprising an illuminator which includes the light source.

8.  The liquid crystal display device of claim 7, wherein the illuminator has an intensity distribution such that a luminance in directions at an angle of 30° or more with respect to a display surface normal direction is 13% or less of a luminance in the display surface normal direction.

9.  The liquid crystal display device of claim 7, wherein the illuminator has an intensity distribution such that a luminance in directions at an angle of 30° or more with respect to a display surface normal direction is 3% or less of a luminance in the display surface normal direction.

10. The liquid crystal display device of any of claims 7 to 9, wherein the illuminator includes a directivity controlling element for controlling directivity of light emitted from the light source.

*FIG.1*

100

50a
40a
30
d  22
24
23
21
20
40b
50b

10

R G B

p

*FIG.2*

10

4

3

1

2

*FIG.3*

*FIG.4*

*FIG.5*

*FIG.6*

*FIG.7*

SUBJECT OF VIEWING

ACTUAL VIEWING RANGE

*FIG.8*

## FIG.9

## FIG.10

*FIG.11*

(a)

LUMINANCE

−30    0    30    ANGLE (deg)

(b)

LUMINANCE

−30    0    30    ANGLE (deg)

(c)

LUMINANCE

−30    0    30    ANGLE (deg)

## FIG.12

**EP 2 124 095 A1**

| **INTERNATIONAL SEARCH REPORT** | International application No. |
|---|---|
| | PCT/JP2007/073789 |

A. CLASSIFICATION OF SUBJECT MATTER
*G02F1/1335*(2006.01)i, *G02B5/02*(2006.01)i, *G02F1/13357*(2006.01)i

According to International Patent Classification (IPC) or to both national classification and IPC

B. FIELDS SEARCHED

Minimum documentation searched (classification system followed by classification symbols)
G02F1/1335, G02B5/02, G02F1/13357

Documentation searched other than minimum documentation to the extent that such documents are included in the fields searched
Jitsuyo Shinan Koho          1922-1996     Jitsuyo Shinan Toroku Koho    1996-2007
Kokai Jitsuyo Shinan Koho    1971-2007     Toroku Jitsuyo Shinan Koho    1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 11-237623 A  (Seiko Epson Corp.), 31 August, 1999 (31.08.99), Full text; all drawings (Family: none) | 1-10 |
| A | JP 2001-125105 A  (Citizen Watch Co., Ltd.), 11 May, 2001 (11.05.01), Par. No. [0089] (Family: none) | 1-10 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 December, 2007 (21.12.07) | 08 January, 2008 (08.01.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9022011 A
- US 5949933 A

- US 5598281 A